# EUROPÄISCHE PATENTSCHRIFT

(11) **EP 1 226 898 B1**
(45) Veröffentlichungstag und Bekanntmachung des Hinweises auf die Patenterteilung: **07.02.2007**
(21) Anmeldenummer: 02002162.2
(22) Anmeldetag: 29.01.2002
(51) Int. Cl.: B23Q 1/54, B23Q 7/00, B23Q 7/02, B23Q 7/04

(54) **Rahmenentnahmevorrichtung**
Frame removing device
Dispositif pour l'enlèvement d'un cadre

(30) Priorität: 29.01.2001 DE 20101639 U
(43) Veröffentlichungstag der Anmeldung: 31.07.2002
(73) Patentinhaber: Urban GmbH & Co. Maschinenbau KG, D-87700 Memmingen (DE)
(72) Erfinder: TESCH, Wolfgang, 87751 Heimertingen (DE)
(74) Vertreter: Pfister, Stefan Helmut Ulrich

(56) Entgegenhaltungen:
- EP-A- 0 303 094
- EP-A- 0 535 981
- BE-A- 648 378

## Beschreibung

Die Erfindung betrifft eine Rahmenentnahmevorrichtung zum Entnehmen eines aus miteinander verbundenen Profilen bestehenden Rahmens aus einer Rahmenbearbeitungs- und/oder Rahmenherstellmaschine, wobei die Vorrichtung ein aus mindestens einem Gestellarm bestehendes, durch einen Antrieb bewegbares, den Rahmen tragendes Gestell aufweist.

Vorgenannte Vorrichtungen sind auch als Ausheber bekannt. Diese werden insbesondere in der Fertigung von aus Kunststoffprofilen bestehenden Rahmen, zum Beispiel Tür- oder Fensterrahmen eingesetzt. Hierbei ist es bekannt, daß die Fensterrahmen im Wesentlichen vertikal orientiert produziert werden. Dabei werden die auf Gehrung geschnittenen Profilstäbe in die Schweißmaschine eingelegt, derart, daß der fertige Rahmen vertikal orientiert ist. Für eine automatische Weiterförderung, zum Beispiel für nachfolgende Bearbeitungsaggregate, ist es notwendig, daß die fertig geschweißten Rahmen aus der Schweißmaschine (als Rahmenherstellmaschine) entnommen werden. Hierzu sind insbesondere auf der der Bearbeitungsperson abgewandten Seite der Schweißmaschine vorgenannten Vorrichtungen bekannt.

Aus der europäischen Patentanmeldung EP 0 753 378 ist eine Vorrichtung zum Transportieren, Positionieren und/oder Verschwenken eines Rahmens sowie ein Verfahren hierzu bekannt. Die in dieser Patentanmeldung vorgestellte Vorrichtung ist tatsächlich zum Transport, zur Positionierung oder zum Verschwenken eines Fenster- beziehungsweise Türrahmens geeignet. Die Vorrichtung ist insbesondere nicht geeignet, Rahmen aus einer Schweißmaschine zu entnehmen und auf einer Transporteinrichtung abzulegen. Dabei ist zu beachten, daß diese Vorrichtungen den Rahmen, der gerade eben erst verschweißt worden ist, möglichst vorsichtig handhabt, damit die Schweißverbindungen nicht beim Abkühlen gestört werden. Auch ist zu beachten, daß der Platz, der zum Entnehmen des Rahmens auf der Rückseite zur Verfügung steht, durch die den Rahmen haltenden Bearbeitungsköpfe begrenzt ist. Gleichzeitig muß sichergestellt werden, daß der Rahmen ausreichend stabil geführt ist.

Aus der Druckschrift EP 05 35 981 A1 ist eine Vorrichtung zum Beladen und zum Transport von Werkstücken zu einer Beschichtungs- beziehungsweise Dekorationsmaschine bekannt. Diese Beschichtungs- beziehungsweise Transportvorrichtung dient dazu, Werkstücke wie Glasbehälter und Trinkgläser zu einer Beschichtungs- beziehungsweise Dekorationsmaschine zu transportieren. Diese Vorrichtung weist einen beweglichen Arm auf, der Greifer besitzt, um das Werkstück von einer Transport- in eine Ladeposition beziehungsweise Beschickungsposition zu transportieren.

Das Werkstück wird mittels der Greifer seitlich erfasst, von dem Förderband entnommen und durch Schwenken dann in die Beschichtungs- beziehungsweise Dekorationsmaschine eingelegt. Nach dem Ende des Dekorationsvorganges wird das Werkstück dann wieder aus der Beschichtungs- beziehungsweise Dekorationsmaschine entnommen. Wird mit einer solchen Vorrichtung ein gerade geschweißter, insbesondere noch nicht vollständig ausgehärteter Rahmen für ein Kunststofffenster oder eine Kunststofftüre ergriffen beziehungsweise bewegt, ist von einer Beschädigung der Schweißstellen, wenn nicht sogar einer Zerstörung des Rahmens auszugehen. Eine solche Vorrichtung kann nicht zum Ausheben von gerade geschweißten Kunststoffrahmen dienen.

Für das Ausheben oder Entnehmen eines Rahmens aus einer Schweißmaschine als Rahmenherstellmaschine sind Vorrichtungen bekannt, die mit drei hintereinander angeordneten Bewegungen den Rahmen zuerst anheben, dann aus der Schweißmaschine rückwärts ausfördern und dann den Rahmen auf dem Gestell in die horizontale Position schwenken. Für jede dieser Bewegungen ist ein eigener Antrieb notwendig, weswegen eine große Anzahl von Antrieben, Aggregaten, zum Beispiel Elektromotoren oder Arbeitszylinder oder dergleichen notwendig ist. Auch besteht das Problem, daß der Gleichlauf der parallel angeordneten Gestellarme oft mangelhaft ist, was dazu führen kann, daß der Rahmen auf dem Gestell nicht sicher geführt ist, ja sogar Gefahr besteht, daß dieser von dem Gestell herunterfällt.

Die Erfindung hat es sich zur Aufgabe gemacht, eine Rahmenentnahmevorrichtung, wie eingangs beschrieben, dahingehend zu verbessern, daß diese kostengünstiger herstellbar ist.

Zur Lösung dieser Aufgabe schlägt die Erfindung eine Rahmenentnahmevorrichtung gemäß Anspruch 1 vor.

Durch solch einen erfindungsgemäßen Aufbau wird es möglich, den Gestellarm im Wesentlichen parallelogrammartig zu bewegen, wobei es dann ausreicht, mit einem Antriebsaggregat den Lenker beziehungsweise den Gestellarm anzutreiben und zu positionieren. Daraus resultiert, daß von den sonst im Stand der Technik bekannten drei Antriebe, zwei eingespart werden können, woraus eine entsprechende Kostenersparnis resultiert. Durch entsprechend günstige Anordnung des Gestellarmes bezüglich des Lenkers ist es möglich, sowohl ein Anheben als auch ein Zurückziehen des aus der Schweißmaschine herauszuhebenden Rahmens mit dem erfindungsgemäßen Vorschlag zu realisieren. Notwendig hierfür ist es, daß das Gestell gegenüber dem Lenker zumindest teilweise beweglich, also um ein Lager verschwenkbar ausgebildet ist.

Erfindungsgemäß ist es auch vorgesehen, daß der Rahmen während des Anhebens und der Positionierung auf dem Gestell aufliegt. Diese erfindungsgemäße Weiterentwicklung bringt für den Rahmen keine zusätzlichen Belastungen. Der frisch geschweißte Rahmen wird ohne Einprägung einer äußeren Haltekraft, zum Beispiel durch seitliche Greifer oder dergleichen, auf dem Gestell gelagert, wodurch nicht die Gefahr besteht, daß der Rahmen beschädigt wird. Mit zunehmender Zeit, insbesondere während der Schwenkbewegungen der Vorrichtung, härten die frischen Schweißverbindungen aus und erhöhen die Stabilität des Kunststoffrahmens.

Es ist weiterhin vorgesehen, daß, gemäß einer Weiterbildung der Erfindung, der Antrieb an dem Lenker angreift. Erfindungsgemäß wurde weiter gefunden, daß es von Vorteil ist, wenn der Antrieb auch eine parallelogrammartige Verschiebung des Gestells bewirkt. Eine solche Bewegung läßt sich in einfacher Weise von einem Antrieb ableiten.

In einer bevorzugten Ausgestaltung der Erfindung ist vorgesehen, daß der Antrieb für eine Verschwenkbewegung des Lenkers dient. Im Stand der Technik war es üblich, die Verschwenkbewegung für den Gestellarm vorzusehen, welche den Aushebvorgang nach den davor ablaufenden translatorischen Bewegungen (Anheben und Zurückziehen) abschloß. Die Verschwenkbewegung setzt nun an dem Lenker an, wobei die Verschwenkbewegung des Lenkers, je nach dem auch zu einer parallelogrammartigen Bewegung des Gestellarmes ausgenützt wird.

Dabei ist vorgesehen, daß der Lenker um eine insbesondere horizontal orientierte Drehachse mit Hilfe des Verschwenkantriebes verschwenkbar ist. Die erfindungsgemäß vorgeschlagene Rahmenentnahmevorrichtung dient zum Entnehmen eines Rahmens aus einer im Wesentlichen vertikal orientierten Schweißmaschine. In einer platzsparenden Ausführung ist vorgesehen, daß sich die erfindungsgemäße Rahmenentnahmevorrichtung hinter der Schweißmaschine anschließt und gegebenenfalls auch den Rahmen in eine horizontale Ebene zurückschwenkt. Die einfachste Möglichkeit dies zu erreichen ist es, die Drehachse des Verschwenkantriebes horizontal zu orientieren, wenngleich die Erfindung hierauf nicht beschränkt ist. In gleicher Weise ist es möglich, eine vertikal orientierte Drehachse vorzusehen, um zum Beispiel ein Entnehmen des Rahmens aus der Schweißmaschine und ein Übergeben, zum Beispiel an eine ebenfalls vertikal orientierte weitere Bearbeitungsmaschine zu erreichen.

Ein besonderer Vorzug der Erfindung liegt darin, daß von dem Antrieb auch eine Verschwenkbewegung des Gestellarms gegenüber dem Lenker ableitbar ist. Durch eine geschickte Anordnung des Antriebes und weiterer Mittel, zum Beispiel von Schub- oder Steuerstangen, Seil- oder Kettenzügen und so weiter ist es möglich, von einem einzigen Drehantrieb beziehungsweise Verschwenkantrieb, der primär auf die Lenker wirkt, auch die Bewegungen des Gestellarmes gegen den Lenker abzuleiten. Darüberhinaus erlaubt aber die Verwendung des Lenkers gemäß der Erfindung auch die Variante, daß ein zusätzlicher Antrieb zwischen Lenker und Gestellarm vorgesehen ist, wodurch zum Beispiel komplexe Bewegungsbahnen durch entsprechende Überlagerungen der beiden Antriebe möglich ist. So ist es auch möglich, die erfindungsgemäße Vorrichtung in verhältnismäßig platzbeengten Verhältnissen einzusetzen. Gleichzeitig verbleibt immer noch die Einsparung eines zusätzlichen Antriebes gemäß dem Stand der Technik.

Die Erfindung ist aber nicht darauf beschränkt, nur die Anzahl der Antriebe einzusparen, durch die erfindungsgemäße Ausgestaltung wird erreicht, daß die Beweglichkeit und damit die Variabilität einer solchen erfindungsgemäßen Rahmenentnahmevorrichtung durch die gelenkige Anordnung des Gestellarmes gegenüber dem Lenker erhöht wird.

Von Vorteil ist es, wenn an der Rahmenentnahmevorrichtung zwei Gestellarme vorgesehen sind, deren Abstand entsprechend der Rahmenbreite variierbar ist. Auf den bekannten Schweißmaschinen werden Fenster von ca. 60 bis zu 300 cm Breite bearbeitet. Für eine optimale Lagerung des Rahmens auf den nachfolgenden Vorrichtungen reicht es aus, wenn diese insbesondere im Bereich der Längsstäbe eine Unterstützung erfahren, weswegen oftmals zwei Gestellarme vorgesehen sind, deren Abstand entsprechend der Rahmenbreite variierbar ist. Dazu befindet sich zum Beispiel der erste Gestellarm ortsfest an der Rahmenentnahmevorrichtung und der andere ist in seiner Position variabel einstellbar oder beide Gestellarme sind in ihrer Stellung variabel positionierbar.

Erfindungsgemäß wird vorgeschlagen, daß pro Gestellarm je ein eigener Lenker vorgesehen ist. Hieraus resultiert ein im Wesentlichen identischer Aufbau der Gestellarme und dadurch Vorteile bei der Produktion. Es ist aber auch möglich, daß ein Lenker für mehrere Gestellarme vorgesehen ist, wobei eine solche Konstruktion insbesondere in automatischen Fertigungsstraßen für Fensterrahmen vorteilhaft ist, die immer konstante Rahmengrößen produzieren.

Die erfindungsgemäße Rahmenentnahmevorrichtung erlaubt es, daß das Gestell den Rahmen, welcher aus der Rahmenbearbeitungsbeziehungsweise Rahmenherstellmaschine entnommen wird, im wesentlichen parallel übernimmt und einem Nachfolgeaggregat im wesentlichen in der gleichen Position übergibt. Zum Beispiel ist vorgesehen, daß das Gestell einen vertikal- oder im wesentlichen vertikal orientierten Rahmen aus der Maschine entnimmt. In Fertigungsanlagen, bei welchen nach der vertikal orientiert arbeitenden Schweißmaschine eine entsprechende orientierte Bearbeitungsmaschine nachgeschaltet ist, ist das Umorientieren des Rahmens nicht notwendig und das Gestell führt eine im wesentlichen parallele oder parallelprogrammartige Bewegung aus.

Alternativ ist es möglich, daß das Gestell den Rahmen aus der Rahmenbearbeitungsmaschine oder Rahmenherstellmaschine entnimmt und danach das Gestell so geschwenkt wird, daß der Rahmen horizontal oder im wesentlichen horizontal orientiert gelagert ist. Die Schweißmaschinen sind dafür geeignet, verhältnismäßig große Fenster zu produzieren, wobei das große Maß oftmals nicht Standardmaß ist und nur in speziellen Einzelfällen benötigt wird. Dabei ist es günstig, diese Maschinen auch zum Bestücken der Maschinen als vertikal arbeitende Maschinen auszustatten, wobei die Platzersparnis mit einer leichteren Bedienbarkeit einhergeht. Nachfolgend ist es aber manchmal günstiger, die Rahmen liegend, horizontal orientiert weiterzutransportieren, wobei die erfindungsgemäße Vorrichtung nicht nur den fertig geschweißten Rahmen aus der Rahmenherstellmaschine entnimmt, sondern ihn auch gleichzeitig aus der vertikalen in eine horizontale Position schwenkt. Die weitere Bearbeitung erfolgt dann zum Beispiel horizontal orientiert.

Die vorgenannten Vorzüge beziehen sich dabei nicht nur auf eine vorgeschaltete Schweißmaschine als Rahmenherstellmaschine, sondern ist in gleicher Weise zum Beispiel auch bei Rahmenbearbeitungsmaschinen einsetzbar, die spezielle Bearbeitungen an einem bereits erstellten Rahmen durchführen.

Des Weiteren ist es günstig, daß die Gestellarme Transportmittel, insbesondere Förderbänder für den Rahmen aufweisen. Der Einsatzbereich vorgenannter Vorrichtungen ist oftmals in automatisch ablaufenden Fertigungsstraßen, wobei die produzierten Rahmen zwischen verschiedenen Bearbeitungsmaschinen weiter transportiert werden. Für den automatischen Transport der Rahmen sind die Transportmittel, insbesondere Fördermittel oder Förderbänder vorgesehen.

In einer bevorzugten Ausbildung der Erfindung ist vorgesehen, daß für ein Verschwenken des Gestellarmes gegenüber dem Lenker ein Ketten- oder Seilzug vorgesehen ist, der von dem Verschwenkantrieb angesteuert ist. Durch die erfindungsgemäße Weiterbildung wird erreicht, daß der für das Verschwenken des Lenkers vorgesehene Schwenkantrieb eine zweite Nutzung erfährt, ein Ketten- oder Seilzug wird so angeordnet, daß er bei Bedarf den Gestellarm gegenüber dem Lenker zu verschwenken vermag. Zum Beispiel wird die Kettenscheibe, die in dem bewegten System des Lenkers gelagert ist, absolut festgehalten, wodurch sich die Verschwenkbewegung ergibt.

Günstig ist es, wenn der Lenker mit dem Gestell arretierbar ist. In diesem Fall wirkt der Lenker als Teil des Gestellarmes und ist mit diesem fest durch eine Arretiervorrichtung befestigt, verbunden. Gleichzeitig hat dies in einer gewissen Stellung des Gestellarmes auch den Vorteil, daß der Gestellarm gegenüber dem Lenker gesichert ist, und ein unerwünschtes Abkippen nicht möglich ist. Dadurch ist es möglich, neben einer parallelogrammartigen Bewegung auch eine Verschwenkbewegung des Gestellarms zu realisieren.

In einer bevorzugten Ausgestaltung der Erfindung ist vorgesehen, daß die Arretierung von der Winkelstellung des Lenkers gegenüber der Horizontalen abhängt. Die Arretierung erfolgt dann, wenn der Lenker um seine Drehachse herum verschwenkt wird und einen entsprechenden Winkel erreicht, unterhalb dem nur ein Verschwenken des Gestellarmes mit dem Lenker erwünscht wird, oberhalb dem aber dann auch eine parallelogrammartige Bewegung des Gestellarmes beziehungsweise des Aushebers erwünscht ist. Diese Winkelstellung kann, wie nachfolgend noch gezeigt wird, an dem Lenker eingestellt werden.

Auch ist es von Vorteil, daß für die Arretierung mindestens ein durch eine Schub- oder Steuerstange bewegbarer Arretierhebel vorgesehen ist, und die Bewegung des Arretierhebels von dem Verschwenkantrieb ableitbar ist. Durch diese vorteilhafte Ausbildung wird erreicht, daß wiederum der Verschwenkantrieb ausgenutzt wird und ein separater Antrieb für eine Arretierung des Lenkers gegenüber des Gestellarmes eingespart werden kann.

In einer vorteilhaften Ausgestaltung der Erfindung ist vorgesehen, daß als Antrieb ein frequenzgesteuerter Elektrogetriebemotor vorgesehen ist. Es sind Elektromotoren bekannt, die frequenzgesteuert einen beliebigen Rampenverlauf erlauben. Durch den Einsatz eines Getriebes ist auch die Drehzahl bei entsprechendem Drehmoment einstellbar. Insbesondere bietet aber der frequenzgesteuerte Elektrogetriebemotor den Vorteil, daß über die Frequenzssteuerung der Gleichlauf der beiden Gestellarme sichergestellt ist. Um sicherzustellen, daß der Rahmen nicht von dem Gestell herunterfällt, ist es notwendig, daß sich die beiden Gestellarme, die den Rahmen ja unterstützen, möglichst parallel und gleichartig bewegen, was bei einer Ansteuerung zum Beispiel von pneumatischen Arbeitszylindern oftmals nicht möglich ist. Dabei erlaubt die Frequenzsteuerung neben der Synchronisierung der Bewegungen der verschiedenen Gestellarme aber auch, daß ein beliebiger Rampenverlauf, also der Verlauf der Geschwindigkeit über der Zeit oder dergleichen, möglich ist.

In einer bevorzugten Ausgestaltung der Erfindung ist vorgesehen, daß die Bewegung und/oder die Arretierung des Gestellarmes gegenüber dem Lenker mechanisch zwangsgeführt von der Verschwenkbewegung des Lenkers abgeleitet ist. Durch eine solche mechanische Koppelung der verschiedenen Bewegungen wird zum einen eine gewisse Betriebssicherheit erreicht, da nur in gewissen Stellungen des Lenkers eine Verschwenkbarkeit des Gestellarmes gegenüber dem Lenker möglich ist. Gleichzeitig wird durch die Zwangsführung die Bewegung beziehungsweise Arretierung des Gestellarmes gegenüber dem Lenker von dem einzigen Verschwenkantrieb, der für den Lenker vorgesehen ist, abgeleitet, wodurch es möglich ist, auf zusätzliche Antriebe zu verzichten.

Durch die erfindungsgemäße Anordnung ist auch gefunden worden, daß der Platzbedarf der erfindungsgemäßen Rahmenentnahmevorrichtung geringer ist, als es im Stand der Technik bekannt ist, da auf die platz-aufwendigen translatorischen Antriebe verzichtet werden kann, die gemäß der Erfindung von der Drehung des Lenkers abgeleitet sind.

Des Weiteren betrifft die Erfindung eine Schweißmaschine zum Schweißen von Kunststoffprofilrahmen, insbesondere Fensterrahmen, die mit einer Rahmenentnahmevorrichtung, wie vorgenannt beschrieben, ausgestattet ist. Dabei ist die Schweißmaschine insbesondere so positioniert, daß die Rahmenebene in der Schweißmaschine im wesentlichen vertikal oder mit einem Winkel von bis zu 30° zur Vertikalen orientiert ist. Die Rahmenentnahmevorrichtung, wie eingangs beschrieben, erlaubt es, daß die fertig geschweißten Rahmen schnell, zuverlässig und sicher aus der Schweißmaschine entfernt werden, damit die Schweißmaschine möglichst schnell wieder mit neuen Profilen ausgestattet werden kann. Durch ein sicheres Herausfördern der fertigen Rahmen aus der Schweißmaschine, wie es durch die vorgenannte Vorrichtung möglich ist, wird auch die Effizienz und Produktivität der erfindungsgemäßen Schweißmaschinen erhöht.

Die Erfindung wird in den abhängigen Ansprüchen weiter beschrieben und in der beiliegenden Zeichnung erläutert.

Es zeigen:
- Fig.1: eine schematische Darstellung in einer Seitenansicht die erfindungsgemäße Rahmenentnahmevorrichtung beziehungsweise die erfindungsgemäße Schweißmaschine.
- Fig.2a: in einer Seitenansicht die erfindungsmäße Rahmenentnahmevorrichtung,
- Fig. 2b und 2c: in einer Ansicht Details IIb und IIc in Fig. 2a,
- Fig. 3a: die erfindungsgemäßte Rahmenentnahmevorrichtung in halb aufgeschwenktem Zustand,
- Fig. 3b und Fig. 3d: Einzelheiten gemäß IIIb beziehungsweise IIId in Fig. 3a,
- Fig. 3c: eine Einzelheit der Führungsbahn gemäß Fig. 3b,
- Fig. 4a: in einer Seitenansicht die Rahmenentnahmevorrichtung 1 in einer weiter geschwenkten Stellung,
- Fig. 4b und 4d: Einzelheiten gemäß IVb und IVd aus Fig. 4a,
- Fig. 4c: Einzelheit der Führungsbahn nach IVc in Fig. 4b,
- Fig. 5a: Endschwenkstellung der erfindungsgemäßen Rahmenentnahmevorrichtung,
- Fig. 5b: Einzelheit Vb in Fig. 5a.

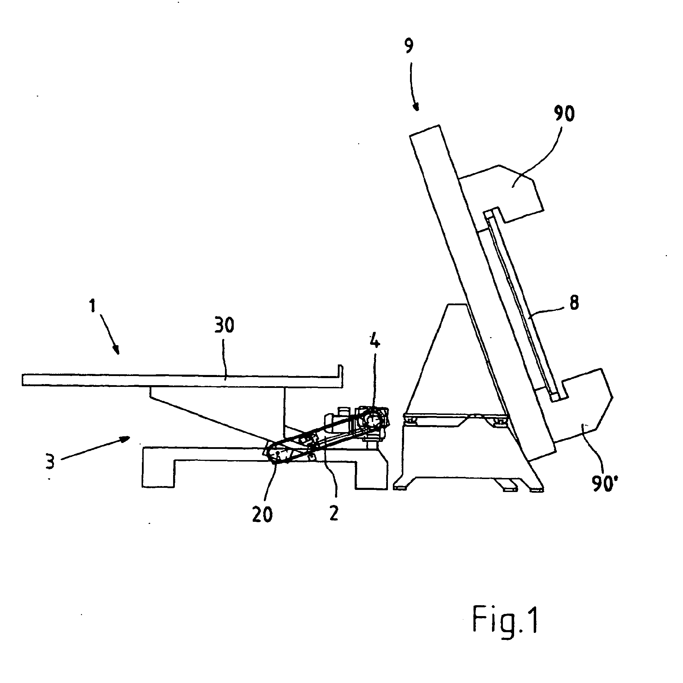

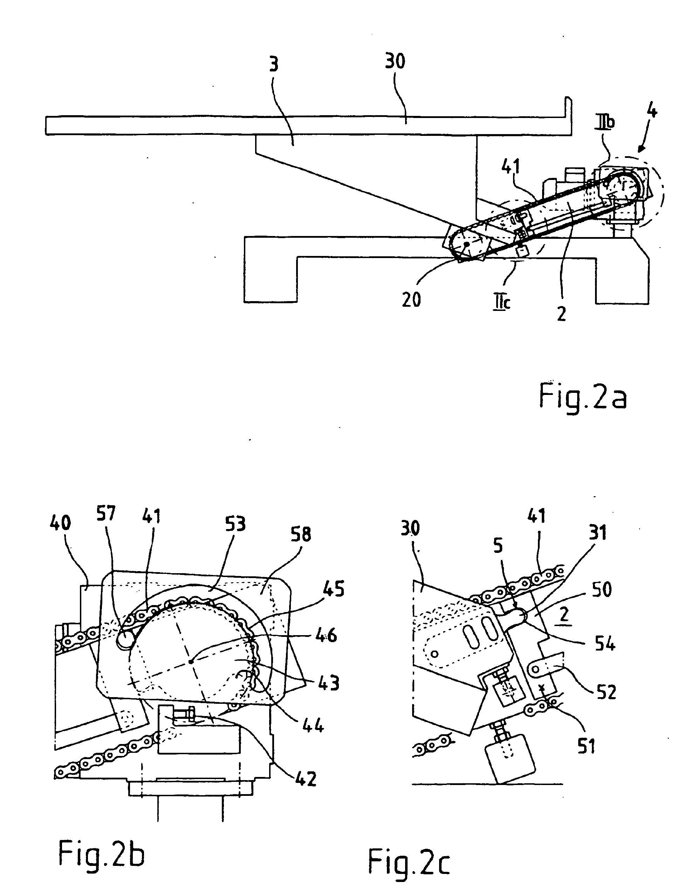

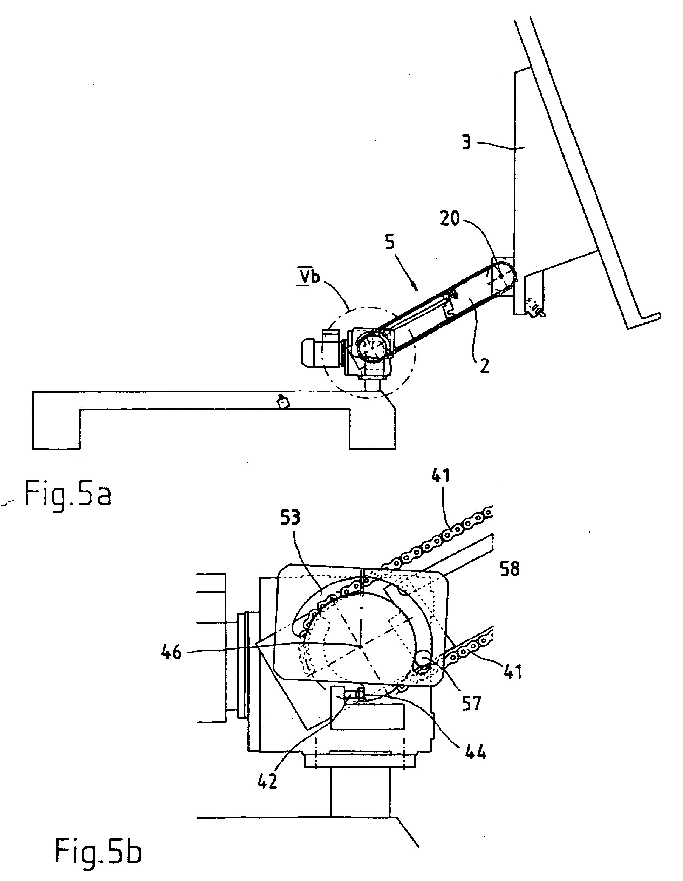

Die erfindungsgemäße Rahmenentnahmevorrichtung beziehungsweise der Einsatz in der ebenfalls erfindungsgemäßen Schweißmaschine 9 ist übersichtsmäßig in Fig. 1 gezeigt. In den Fig. 2 ff. bis Fig. 5 ff. sind die verschiedenen Stellungen der Rahmenentnahmevorrichtung 1 gezeigt, wobei Fig. 2a das im wesentlichen horizontal orientierte Gestell 3 zeigt, in Fig. 5a ist das Gestell komplett nach oben geschwenkt, um einen Rahmen 8 aus der Schweißmaschine 9 zu übernehmen.

Die in Fig. 1 dargestellte Schweißmaschine 9 ist im Wesentlichen vertikal orientiert. Die Schweißmaschine 9 besitzt Bearbeitungsköpfe 90, 90', die hier nicht weiter erläutert werden sollen und welchen den Rahmen 8 verschweißen. Um nicht so viel Hallenfläche zu verwenden wird vorgeschlagen, die Schweißmaschine 9 im Wesentlichen vertikal orientiert aufzustellen. Die Vorrichtung 1 dient dazu, fertig geschweißte Rahmen 8 aus der Schweißmaschine 9 zu entnehmen und, wie hier dargestellt, horizontal zu schwenken, um diese einer weiteren Bearbeitung zuzuführen.

Die Rahmenentnahmevorrichtung 1 besteht aus einem Gestell 3, welches zumindest teilweise gelenkig über das Lager 20 mit dem Lenker 2 verbunden ist. An dem Lenker 2 greift der Antrieb 4 an, der zum einen eine Verschwenkbewegung des Lenkers 2 ermöglicht und zum anderen auch eine parallelogrammartige Verschiebung des Gestelles 3 erlaubt.

In Fig. 2a ist die Rahmenentnahmevorrichtung 1 nach Fig. 1 vergrößert dargestellt. Erfindungsgemäß wird vorgeschlagen, das Gestell 3, insbesondere den Gestellarm 30 gelenkig (durch das Lager 20) mit dem Lenker 2 auszubilden. Der Gestellarm 30 trägt den hier nicht dargestellten Rahmen 8. Der Gestellarm 30 weist dabei auf seiner Rückseite den Ansatz mit dem Lager 20 auf. Für eine Bewegung des Gestellarms 30 gegenüber dem Lenker 2 um das Lager 20 herum dient der Kettenzug 41.

In Fig. 2b sind Einzelheiten über den Aufbau des Antriebes 4 gezeigt. Als Antrieb 4 dient zum Beispiel ein Elektromotor, dessen Getriebegehäuse 40 durch die Vorbauten verdeckt im Wesentlichen gestrichelt dargestellt ist. Der Antrieb 4 besitzt eine im Wesentlichen horizontal orientierte Antriebsachse 46, um welche insbesondere der Lenker 2 schwenkbar ist, aber auch konzentrisch ist mit dem Kettenritzel 45. Das Kettenritzel 45 wirkt mit dem Kettenzug 41 zusammen. Starr verbunden mit dem Kettenritzel 45 ist die Anschlagscheibe 43, deren Anschlag 44 mit einem einstellbaren Anschlag 42 zusammenwirkt. Der einstellbare Anschlag 42 ist raumfest ausgebildet.

Erfindungsgemäß wird vorgeschlagen, daß der Lenker 2 nur zeitweilig gelenkig mit dem Gestellarm 30 zusammenwirkt. Für eine feste Verbindung zwischen dem Gestellarm 30 und dem Lenker 2 dient die Arretierung 5, die insbesondere in Fig. 2 dargestellt ist.

An dem vorderen Ende des Lenkers 2 befindet sich, drehbar um die Drehachse 51 gelagert, der Arretierhebel 50. Der Arretierhebel 50 wird mit einem kurzen Hebel bezüglich der Drehachse 51 von der Steuer- oder Schubstange 52 betätigt. Der Arretierhebel 50 weist eine Ausnehmung 54 für einen Arretierzapfen 31 auf, der sich an dem Gestellarm 30 befindet. Wird nun die Steuerstange 52 betätigt, zum Beispiel zurückgezogen, so wird aufgrund des großen Hebels der Ausnehmung 54 bezüglich der Drehachse 51 ein großer Weg des Arretierhebels 50 beschrieben und gegebenenfalls der Arretierzapfen 31 freigegeben. In den in Fig. 2a bis 2c gezeigten Darstellungen wird durch die Arretierung 5 erreicht, daß der um die Drehachse 20 gelenkige Gestellarm 30 nicht nach hinten, engegen dem Uhrzeigersinn wegkippt.

Wird in den Darstellungen gemäß Fig. 2a bis 2c beziehungsweise 3a bis 3d der Lenker 2 um die Drehachse 46 durch einen Antrieb 4 geschwenkt, so bewegt sich in gleicher Weise auch der Gestellarm 30 mit. Dies ergibt sich aus der geschlossenen Arretierung 5.

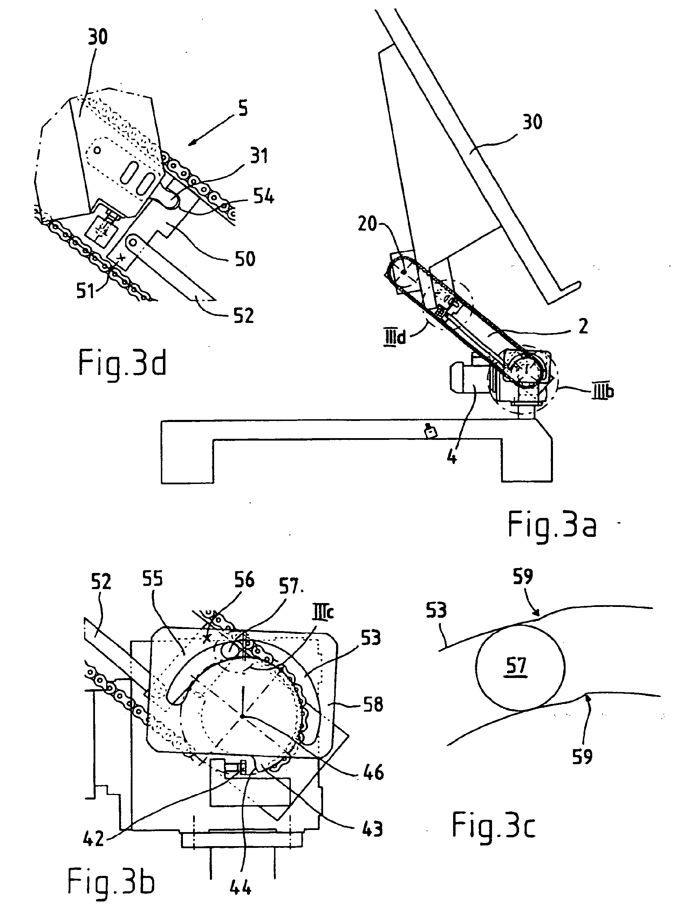

Die Arretierung 5 wird über die Bahn 53 in der Bahnscheibe 58 gesteuert. Die Bahnscheibe 58 ist, ähnlich wie der Anschlag 42, absolut fest ausgebildet. Für die Steuerung der Arrtetierung 5 ist vorgesehen (vergleiche Fig. 3b), daß die Steuerstange 52 im Bereich des Antriebes 4 gelenkig mit einem Umlenkhebel 55 verbunden ist. Der Umlenkhebel 55 seinerseits ist um einen Drehpunkt 56 drehbar auf dem Lenker 2 gehalten. Die Stellung des Umlenkhebel 55 wird durch den Stift 57 bestimmt, der in der Bahn 53 der Bahnscheibe 58 geführt ist.

Da sich der Lenker 2 gegenüber der Bahnscheibe 58 verdreht, bewegt sich auch der Stift 57 in der Bahnscheibe 58. Wie in Fig. 3c gezeigt, weist die Bahn 53 einen Absatz 59 auf, der als Schaltfläche dient, um die Arretierung zu entriegeln. Links von der gezeigten Schaltfläche 59 ist die Arretierung 5 geschlossen, rechts davon ist die Arretierung frei. In Fig. 3c ist die Arretierung noch geschlossen. Der Drehpunkt 56 ist so angeordnet, daß der Hebelarm zwischen dem Drehpunkt 56 und dem Stift 57 geringer ist, als der Abstand zwischen dem Ansteuerungspunkt der Steuerstange 52 mit dem Drehpunkt 56.

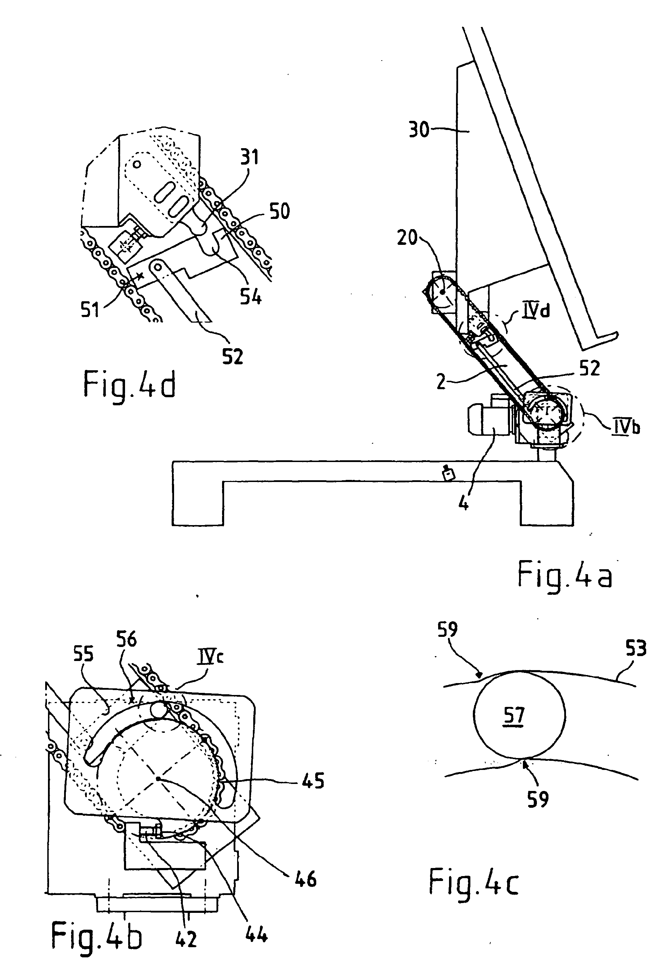

In Fig. 4a bis 4c ist die Situation zu dem Zeitpunkt gezeigt, wo der Stift 57 über die Schaltfläche 59 hinübergleitet und so die Arretierung 5 (vergleiche Fig. 4d) öffnet. Der Stift 57 wird durch die Schaltfläche 59 derart versetzt, daß der Umlenkhebel 55 sich um den Drehpunkt 56 dreht und die Steuerstange 52 derart betätigt, daß der Arretierhebel 50 (vergleiche Fig. 4d) zurückgeschwenkt wird, so, daß der Arretierzapfen 31 aus der Ausnehmung 54 heraustaucht und den Gestellarm 30 von dem Lenker 2 entkoppelt. Gleichzeitig, wenn die Arretierung 5 wie vor geschildert gelöst wird, liegt auch der Anschlag 44 der Anschlagscheibe 43 an dem einstellbaren Anschlag 42 an (vergleiche Fig. 4b im Vergleich zu Fig. 3b). Dabei ist zu beachten, daß die Anschlagscheibe 43 fest verbunden ist mit dem Ritzel 45. Eine weitere Rotation des Lenkers 2 ergibt jetzt zusätzlich, aufgrund des festgelegten Ritzels eine Zugbewegung über den Kettenzug 41 derart, daß der Gestellarm 30 über das Lager 20 gegenüber dem Lenker 2 parallelogrammartig verschwenkt wird. Durch die Dimensionierung der Durchmesser der Ritzel ist der jeweilige Weg und Neigung des Gestellarmes 30 einstellbar. Diese Wahlmöglichkeit soll auch von dem Betriff "parallelogrammartig" dieser Anmeldung umfaßt sein. Zwischen der Stellung in Fig. 4a und Fig. 5a ist der Lenker 2 um ca. 90° weitergeschwenkt, der Gestellarm 30 ist aber im Wesentlichen in der gleichen Neigung verblieben, wie in Fig. 4a. Es ist auch möglich, daß sich der Gestellarm 30 entgegen der Verschwenkbewegung des Lenkers 2 um die Antriebsachse 46 etwas zurückbewegt. Als parallelogrammartig wird hierbei nicht nur eine absolut parallel geführte Bewegung angesehen, sondern umfaßt auch einen gewissen Spielraum bei der Orientierung. Wesentlich ist aber, daß der Gestellarm 30 vom Lenker 2 um das Lager 20 herum beweglich ist und, insbesondere allein von der Bewegung des Antriebes 4 abgeleitet, eine Aushebbewegung für den Rahmen 8 aus der Schweißmaschine 9 erlaubt.

Durch die in der Zeichnung dargestellte Ausgestaltung wird insbesondere eine Zwangsführung der Bewegung des Gestellarmes 30 gegenüber dem Lenker beziehungsweise der Arretierung 5 von der Schwenkbewegung des Lenkers 2 erreicht. Eine solche mechanische Kopplung ist sehr betriebssicher, da nicht im Rahmen einer aufwendige Programmierung die verschiedenen Kinematiken aufeinander abgestimmt werden müssen, die bei einer Fehlfunktion unter Umständen zu unkontrolierbaren Zuständen führt. Durch die erfindungsgemäße Ausbildung wird insbesondere sichergestellt, daß erst dann, wenn auch die Arretierung die Beweglichkeit zwischen Gestellarm 30 und Lenker 2 zuläßt, der Gestellarm 30 auch verschwenkt wird. Genau zu diesem Zeitpunkt wird der Anschlag 44 der Anschlagscheibe 43 eine weitere Rotation des Ritzels 45 vermeiden und es werden über den Kettenzug 41 Kräfte übertragen, die ein Verdrehen des Gestellarmes 30 gegenüber dem Lenker 2 erlauben. Die Gleichzeitigkeit erhöht die Sicherheit und wird dadurch erreicht, daß mit Anliegen des Anschlages 44 am Anschlag 42 der Stift 57 über die Schaltfläche 59 der Bahn 53 gleitet und die Arretierung freigibt oder beim zurückschwingenden Vorgang schließt. Durch die mechanische Zwangsführung werden auch gleichzeitig aufwendige Programmierungen für eine entsprechende Steuerung von mehreren übereinander gelagerten Bewegungseinrichtungen und Antrieben vermieden. Für eine entsprechende Justage ist der Anschlag 42 einstellbar ausgebildet.

Der in Fig. 5a hochgeschwenkte Gestellarm 30 nimmt dann den Rahmen 8 auf und schwenkt gegebenenfalls in die horizontale Lage zurück, einfach indem die vorgenannten Verfahrensschritte in umgekehrter Reihenfolge abgearbeitet werden beziehungsweise der Lenker entgegen dem Uhrzeigersinn geschwenkt wird. Dabei ist es möglich, daß die Vorrichtung erfindungsgemäß auch ein Umlegen des Rahmens von der im Wesentlichen vertikalen Position in die horizontale Lage erlaubt, oder aber die Vorrichtung aus einer ersten Maschine den Rahmen entnimmt, dann den Rahmen zu einer anderen Maschine transportiert und dort wieder einlegt.

## Patentansprüche

1. Rahmenentnahmevorrichtung zum Entnehmen eines aus miteinander verbundenen Kunststoffprofilen bestehenden Rahmens, zum Beispiel von Tür- oder Fensterrahmen, aus einer Rahmenbearbeitungs- und/oder Rahmenherstellmaschine, wobei die Vorrichtung ein aus mindestens einem Gestellarm (30) bestehendes, durch einen Antrieb (4) bewegbares, den Rahmen tragendes Gestell (3) aufweist, wobei das Gestell (3) einen Lenker (2) aufweist, **dadurch gekennzeichnet, daß** der Gestellarm (30) zumindest zeitweise gegenüber dem Lenker (2) verschwenkbar ist, der Lenker (2) mit dem Gestell (3) arretierbar ist, der Antrieb (4) an dem Lenker (2) angreift und es ermöglicht neben einer parallelogrammartigen Bewegung auch eine Verschwenkbewegung des Gestellarmes (30) zu realisieren.

2. Rahmenentnahmevorrichtung nach dem vorhergehenden Anspruch 1, **dadurch gekennzeichnet, daß** der Rahmen auf dem Gestell (3) aufliegt.

3. Rahmenentnahmevorrichtung nach einem der vorhergehenden Ansprüche, **dadurch gekennzeichnet, daß** der Antrieb (4) für eine Verschwenkbewegung des Lenkers (2) dient.

4. Rahmenentnahmevorrichtung nach einem der vorhergehenden Ansprüche, **dadurch gekennzeichnet, daß** an der Vorrichtung (1) zwei Gestellarme (30) mit entweder einem Lenker (2) für beide Gestellarme (30) und/oder je einem eigenen Lenker (2) vorgesehen sind, deren Abstand entsprechend der Rahmenbreite variierbar ist.

5. Rahmenentnahmevorrichtung nach einem der vorhergehenden Ansprüche, **dadurch gekennzeichnet, daß** sich die Gestellarme (30) gleichzeitig, parallel bewegen.

6. Rahmenentnahmevorrichtung nach einem der vorhergehenden Ansprüche, **dadurch gekennzeichnet, daß** das Gestell (3) einen vertikal oder im Wesentlichen vertikal in der Bearbeitungs- oder Rahmenherstellmaschine (9) gelagerten Rahmen (8) aufnimmt.

7. Rahmenentnahmevorrichtung nach einem der vorhergehenden Ansprüche, **dadurch gekennzeichnet, daß** das Gestell (3) den Rahmen (8) aus der Rahmenbearbeitungs- oder Rahmenherstellmaschine (9) im Wesentlichen parallel übernimmt und einem nachfolgenden Aggregat in im Wesentlichen gleicher Position übergibt.

8. Rahmenentnahmevorrichtung nach einem der vorhergehenden Ansprüche, **dadurch gekennzeichnet, daß** die Vorrichtung (1) den Rahmen (8) der Rahmenbearbeitungs- oder Rahmenherstellmaschine (9) entnimmt und danach das Gestell so geschwenkt wird, daß der Rahmen horizontal oder im Wesentlichen horizontal orientiert gelagert ist.

9. Rahmenentnahmevorrichtung nach einem der vorhergehenden Ansprüche, **dadurch gekennzeichnet, daß** die Gestellarme (30) Transportmittel, insbesondere Förderbänder für den Rahmen (8) aufweisen.

10. Rahmenentnahmevorrichtung nach einem der vorhergehenden Ansprüche, **dadurch gekennzeichnet, daß** für ein Verschwenken des Gestellarmes (30) gegenüber dem Lenker (2) ein Ketten- oder Seilzug (41) vorgesehen ist, der von dem Verschwenkantrieb (4) angesteuert ist.

11. Rahmenentnahmevorrichtung nach einem der vorhergehenden Ansprüche, **dadurch gekennzeichnet, daß** der Lenker (2) mit dem Gestell (3) arretierbar (5) ist.

12. Rahmenentnahmevorrichtung nach einem der vorhergehenden Ansprüche, **dadurch gekennzeichnet, daß** die Arretierung (5) von der Winkelstellung des Lenkers (2) gegenüber der Horizontalen, oder gegenüber dem Gestellarm (30) abhängt.

13. Rahmenentnahmevorrichtung nach einem der vorhergehenden Ansprüche, **dadurch gekennzeichnet, daß** der Lenker (2) um eine insbesondere horizontal orientierte Drehachse (46) mit Hilfe des Verschwenkantriebes (4) verschwenkbar ist.

14. Rahmenentnahmevorrichtung nach einem der vorhergehenden Ansprüche, **dadurch gekennzeichnet, daß** für die Arretierung (5) mindestens ein durch eine Schubstange oder Steuerstange (52) bewegbarer Arretierhebel (50) vorgesehen ist und die Bewegung des Arretierhebels (50) von dem Verschwenkantrieb (4) ableitbar ist und/oder als Antrieb (4) ein frequenzgesteuerter Elektrogetriebemotor oder ein hydraulischer Drehzylinder oder dergleichen vorgesehen ist.

15. Rahmenentnahmevorrichtung nach einem der vorhergehenden Ansprüche, **dadurch gekennzeichnet, daß** über die Frequenzsteuerung der Elektromotoren die Bewegungen der an der Vorrichtung (1) vorgesehenen Gestellarme (30) synchronisierbar sind.

16. Rahmenentnahmevorrichtung nach einem der vorhergehenden Ansprüche, **dadurch gekennzeichnet, daß** auf der Antriebswelle ein Kettenritzel (45) mit einer Anschlagscheibe (43) vorgesehen ist und über das Kettenritzel (45) und die Kette (41) das Verschwenken des Gestellarmes (30) gegenüber dem Lenker (2) erfolgt.

17. Rahmenentnahmevorrichtung nach einem der vorhergehenden Ansprüche, **dadurch gekennzeichnet, daß** an dem Lenker (2) ein Umlenkhebel (55) mit einem Stift (57) drehbar gelagert ist und der Stift (57) in einer Bahnscheibe (58) geführt ist, der Umlenkhebel (55) auf die Schubstange (52) wirkt und durch eine Veränderung der Bahn (53) der Bahnscheibe (58) die Schubstange (52) bewegbar ist.

18. Rahmenentnahmevorrichtung nach einem der vorhergehenden Ansprüche, **dadurch gekennzeichnet, daß** die Anschlagscheibe (43) dann eine Drehung des Ritzels (45) verhindert, wenn der Gestellarm (30) vom Lenker (2) entriegelt ist.

19. Rahmenentnahmevorrichtung nach einem oder mehreren der vorhergehenden Ansprüche, **dadurch gekennzeichnet, daß** die Bewegung und/oder die Arretierung des Gestellarmes (30) gegenüber dem Lenker (2) mechanisch zwangsgeführt von der Verschwenk-bewegung des Lenkers (2) abgeleitet ist.

20. Schweißmaschine zum Schweißen von Kunststoffprofilrahmen, insbesondere Fensterrahmen, mit einer Rahmenentnahmevorrichtung nach einem der vorhergehenden Ansprüche.

21. Schweißmaschine nach Anspruch 20, **dadurch gekennzeichnet, daß** die Rahmenebene (8) in der Schweißmaschine (9) im Wesentlichen vertikal oder mit einem Winkel von bis zu 30° zur Vertikalen hin orientiert ist und/oder die Rahmenentnahmevorrichtung aus der Schweißmaschine geschweißte, noch nicht ausgehärtete Rahmen entnimmt.

## Claims

1. Device for removing frames for removing a frame comprising plastic profiles attached to one another, for example a door or window frame, from a machine for machining and/or manufacturing frames, the device having a stand (3) which comprises at least one stand arm (30), and can be moved by a drive (4), and carries the frame, the stand (3) having a swinging arm (2), **characterised in that** the stand arm (30) can be swung relatively to the swinging arm (2) at least at times, the swinging arm (2) can be arrested with the stand (3), the drive (4) engages at the swinging arm (2) and makes it possible to realise, besides a parallelogram-like movement, also a swinging movement of the stand arm (30).

2. Device for removing frames according to the preceding claim 1, **characterised in that** the frame is supported by the stand (3).

3. Device for removing frames according to one of the preceding claims, **characterised in that** the drive (4) serves for a swinging movement of the swinging arm (2).

4. Device for removing frames according to one of the preceding claims, **characterised in that** at the device (1) two stand arms (30) with either one swinging arm (2) for both stand arms (30), and/or one individual swinging arm (2) each are provided, the distance of which can be varied according to the width of the frame.

5. Device for removing frames according to one of the preceding claims, **characterised in that** the stand arms (30) move simultaneously, parallel.

6. Device for removing frames according to one of the preceding claims, **characterised in that** the stand (3) holds a frame (8) supported vertically or substantially vertically in the machining or frame manufacturing machine (9).

7. Device for removing frames according to one of the preceding claims, **characterised in that** the stand (3) takes over the frame (8) from the frame machining or frame manufacturing machine (9) substantially parallel, and passes it to a following aggregate substantially in the same position.

8. Device for removing frames according to one of the preceding claims, **characterised in that** the device (1) removes the frame (8) from the frame machining or frame manufacturing machine (9), and, after that, the stand is swung in such a way that the frame is supported in an horizontal orientation or in a substantially horizontal orientation.

9. Device for removing frames according to one of the preceding claims, **characterised in that** the stand arms (30) have transport means, in particular conveyor belts for the frame (8).

10. Device for removing frames according to one of the preceding claims, **characterised in that** a chain block or cable pull (41), which is selected by the swinging drive (4), is provided for swinging the stand arm (30) relatively to the swinging arm (2).

11. Device for removing frames according to one of the preceding claims, **characterised in that** the swinging arm (2) can be arrested with the stand (3).

12. Device for removing frames according to one of the preceding claims, **characterised in that** the fixing device (5) depends on the angle position of the swinging arm (2) relatively to the horizontal line, or relatively the stand arm (30).

13. Device for removing frames according to one of the preceding claims, **characterised in that** the swinging arm (2) can be swung around a rotational axis (46), orientated in particular horizontally, by means of the swinging drive (4).

14. Device for removing frames according to one of the preceding claims, **characterised in that** for the fixing device (5) at least one stop lever (50), which can be moved by a connecting rod or a control rod (52), is provided, and the movement of the stop lever (50) can be deduced from the swinging drive (4), and/or as drive (4) a frequency-controlled electro gear motor or a hydraulic rotational cylinder or the like is provided.

15. Device for removing frames according to one of the preceding claims, **characterised in that** the movements of the stand arms (30) provided at the device (1) can be synchronised via the frequency control of the electro motors.

16. Device for removing frames according to one of the preceding claims, **characterised in that** on the drive shaft a chain pinion (45) with a limit stop washer (43) is provided, and the swinging of the stand arm (30) relatively to the swinging arm (2) is carried out via the chain pinion (45) by the chain (41).

17. Device for removing frames according to one of the preceding claims, **characterised in that** at the swinging arm (2) a reverse lever (55) with a pin (57) is supported rotationally, and the pin (57) is guided in a track disc (58), the reverse lever (55) acts on the connecting rod (52), and by changing the track (53) of the track disc (58) the connecting rod (52) becomes mobile.

18. Device for removing frames according to one of the preceding claims, **characterised in that** the limit stop washer (43) than prevents a turning of the pinion (45) when the stand arm (30) is released from the swinging arm (2).

19. Device for removing frames according to one or more of the preceding claims, **characterised in that** the movement and/or the arresting of the stand arm (30) relatively to the swinging arm (2) is deduced restricted guided mechanically from the swinging movement of the swinging arm (2).

20. Welding machine for welding plastic profile frames, in particular window frames, with a device for removing frames according to one of the preceding claims.

21. Welding machine according to claim 20, **characterised in that** plane of the frame (8) in the welding machine (9) is substantially vertical, or is orientated with an angle of up to 30° to the vertical line, and/or the device for removing frames removes frames from the welding machine which are welded, but not yet cured.

## Revendications

1. Dispositif de retrait de cadres, par exemple des cadres de portes ou de fenêtres, constitués de plusieurs profilés en plastique soudés les uns aux autres, permettant de les enlever d'une machine d'usinage et/ou d'une machine de fabrication, le dispositif consistant en une structure de support (3) comportant au moins un bras de support (30) pouvant être pivoté à l'aide d'une commande (4) et un levier (2), **caractérisé en ce que** le bras de support (30), peut pivoter par rapport au levier (2), pouvant être immobilisé par rapport à la structure (30), et **en ce que** la commande (4) agit sur le levier (2) afin d'effectuer en plus d'un mouvement parallèle un pivotement du bras (30).

2. Dispositif de retrait de cadres selon la revendication 1,
**caractérisé en ce que** le cadre est posé sur la structure de support (3).

3. Dispositif de retrait de cadres selon une des revendications précédentes, **caractérisé en ce que** la commande (4) permet de faire pivoter le levier (2).

4. Dispositif de retrait de cadres selon une des revendications précédentes, **caractérisé en ce que** le dispositif (1) comporte deux bras de support (30), dont la distance les séparant est ajustable en fonction de la largeur du cadre, et un levier commun (2) et/ou deux leviers (2) individuels.

5. Dispositif de retrait de cadres selon une des revendications précédentes, **caractérisé en ce que** les bras de support (30) se déplacent simultanément et parallèlement entre eux.

6. Dispositif de retrait de cadres selon une des revendications précédentes, **caractérisé en ce que** la structure de support (3) reçoit un cadre (8) orienté verticalement ou approximativement verticalement dans la machine d'usinage ou de fabrication (9).

7. Dispositif de retrait de cadres selon une des revendications précédentes, **caractérisé en ce que** la structure (3) extrait le cadre (8) de la machine d'usinage ou de fabrication (9) de manière approximativement parallèle et le transfère vers la machine suivante dans une position sensiblement identique.

8. Dispositif de retrait de cadres selon une des revendications précédentes, **caractérisé en ce que** le dispositif (1) prélève le cadre (8) de la machine d'usinage ou de fabrication (9) puis pivote la structure afin que le cadre soit horizontal ou approximativement horizontal.

9. Dispositif de retrait de cadres selon une des revendications précédentes, **caractérisé en ce que** les bras de support (30) comportent des moyens de transport pour cadre (8), en particulier des transporteurs à bande.

10. Dispositif de retrait de cadres selon une des revendications précédentes, **caractérisé en ce qu'**un système à courroies ou à chaînes (41), actionné par la commande (4), permet de pivoter le bras de support (30) par rapport au levier (2).

11. Dispositif de retrait de cadres selon une des revendications précédentes, **caractérisé en ce que** le levier (2) peut être immobilisé par rapport à la structure de support (3) par l'élément de blocage (5).

12. Dispositif de retrait de cadres selon une des revendications précédentes, **caractérisé en ce que** la possibilité d'immobilisation par l'élément de blocage (5) dépend de l'angle existant entre le levier (2) et l'axe horizontal ou le bras de support (30).

13. Dispositif de retrait de cadres selon une des revendications précédentes, **caractérisé en ce que** le levier (2) peut pivoter autour d'un axe horizontal (46) à l'aide de la commande de pivotement (4).

14. Dispositif de retrait de cadres selon une des revendications précédentes, **caractérisé en ce que** l'élément de blocage (5) consiste en un levier de blocage (50) dont le mouvement peut être provoqué par la commande de pivotement (4) et/ou par un moteur pas à pas piloté par modulation de fréquence, par un cylindre hydraulique ou par un moyen similaire.

15. Dispositif de retrait de cadres selon une des revendications précédentes, **caractérisé en ce que** les mouvements des bras de support (30) situés sur le dispositif (1) peuvent être synchronisés à l'aide de l'ajustement des fréquences de ces moteurs électriques.

16. Dispositif de retrait de cadres selon une des revendications précédentes, **caractérisé en ce qu'**une roue dentée (45) et une plaque de butée (43) sont prévues et **en ce que** la chaîne (41) et la roue dentée (45) transmettent le mouvement de pivotement du bras de support (30) par rapport au levier (2).

17. Dispositif de retrait de cadres selon une des revendications précédentes, **caractérisé en ce qu'**une tige (57) est située sur un levier de transfert (55), qui est fixé de façon pivotante sur le levier (2) et **en ce que** la tige (57) est guidée dans une ouverture allongée d'une plaque (58) et le levier de transfert (55) agit sur la tige d'actionnement (52) de sorte que le mouvement (53) de la tige dans la plaque (58) permet de déplacer la tige d'actionnement (52).

18. Dispositif de retrait de cadres selon une des revendications précédentes, **caractérisé en ce que** la plaque de butée (43) bloque le mouvement de la roue dentée (45) lorsque le bras de support (30) a été débloqué du levier (2).

19. Dispositif de retrait de cadres selon une des revendications précédentes, **caractérisé en ce que** le mouvement et/ou le blocage du bras de support (30) par rapport au levier (2) est systématiquement provoqué mécaniquement par le pivotement du levier (2).

20. Machine de soudage destinée au soudage de cadres constitués de profilés en plastique tels des cadres de fenêtres, utilisant un dispositif de retrait de cadres selon une des revendications précédentes.

21. Machine de soudage selon la revendication 20, **caractérisée en ce que** le plan (8) du cadre à l'intérieur de la machine de soudage (9) est approximativement vertical ou forme un angle allant jusqu'à 30° par rapport à la verticale et/ou **en ce que** le dispositif retire de la machine de soudage des cadres n'ayant pas encore refroidis.
